# EUROPÄISCHE PATENTANMELDUNG

(11) **EP 2 787 319 A1**
(43) Veröffentlichungstag der Anmeldung: **08.10.2014**
(21) Anmeldenummer: 13162632.7
(22) Anmeldetag: 05.04.2013
(51) Int. Cl.: G01C 11/02, B64D 47/08, G03B 15/00, B64C 39/02

(54) **Steuerung einer Bildauslösung zur Luftbilderfassung in Nadir-Ausrichtung für ein unbemanntes Fluggerät**

(71) Anmelder: Leica Geosystems AG, 9435 Heerbrugg (CH)
(72) Erfinder: Wagner, Rüdiger J., CH-9463 Oberriet (CH); Naderhirn, Michael, AT-4020 Linz (AT)
(74) Vertreter: Gyaja, Christoph Benjamin

(57) **Zusammenfassung**

Verfahren zur Luftbilderfassung mit einem unbemannten und steuerbaren Fluggerät mit Kamera, insbesondere Drohne, während einer Flugbewegung des Fluggeräts mit einem fortlaufenden Bestimmen einer Kameraposition und einer Ausrichtung einer optischen Kameraachse und einem Erfassen einer Luftbildsserie. Für jedes Luftbild (21a-b) der Luftbildserie wird das Erfassen des jeweiligen Luftbilds (21a-b) ausgelöst beim Durchfliegen eines jeweiligen Bildauslösebereichs (33) mit dem Fluggerät, wobei die Lage des jeweiligen Bildauslösebereichs (33) zumindest durch jeweils eine dem jeweiligen Bildauslösebereich (33) zugeordnete Auslöseposition in einem Flugplan bestimmt ist, und ausgelöst in Abhängigkeit von der Ausrichtung der Kameraachse beim Durchfliegen des jeweiligen Bildauslösebereichs (33) hinsichtlich einem Erfüllen einer definierten Maximal-Winkelabweichung bezüglich einer vorbestimmten Raumausrichtung.

## Beschreibung

Die Erfindung betrifft ein Verfahren zur Erfassung von Luftbildern nach dem Oberbegriff des Anspruchs 1, eine Steuerungseinheit für einen unbemannten Luftbilderfassungsflug nach Anspruch 11 und ein unbemanntes Fluggerät nach Anspruch 13.

Unbemannte Fluggeräte (UAV) nach dem Stand der Technik werden neben militärischen Einsatzgebieten zunehmend auch zur zivilen Geländeerfassung und Erdbeobachtung eingesetzt. Dabei wird gemäss einer Flugplanung eine vorbestimmte Flugroute befolgt, wobei mittels einer Kamera oder eines abbildenden Sensors eine Vielzahl von Luftbildern und Daten zumeist mit einer bestimmten Bilderfassungsfrequenz und einer bestimmten Bildüberlappung (benachbarter Bilder) entlang der Route erfasst wird. Hierfür sind typischerweise jeweilige Auslösepunkte für die Bilderfassung im Flugplan definiert. Zudem werden Positions- und Ausrichtungsdaten für das Fluggerät gemessen und mit den jeweils erfassten Bildern verknüpft. Die Bildauslösung wird beispielsweise basierend auf erfassten GPS-Positionsdaten oder Zeitdaten ausgelöst.

Die Gesamtheit der während des Flugs erfassten Daten werden dann im Rahmen eines nachgeordneten "Post-Processings" derart verarbeitet, dass durch eine geeignete Verknüpfung der Bilder und Verrechnen der Lagedaten ein flächiges, stereophotogrammetrisches Abbild des erfassten Geländes und daraus ein orthogonales Produkt erzeugt wird.

Insbesondere leichte UAVs sind dabei sehr windanfällig und instabil d.h. deren jeweilige Lage kann durch schon wenig starke Windböen oder andere äussere Einflüsse deutlich beeinflusst und in unbestimmter Weise verändert werden. Dadurch werden die Luftbilder jeweils nicht mit gleicher Ausrichtung bzw. Blickwinkel des Fluggeräts erfasst, sondern weisen jeweils einen Versatz nicht nur in Flugrichtung sondern z.B. auch in eine Richtung orthogonal zur Flugrichtung auf (Blickrichtung).

Herkömmliche UAVs berücksichtigen bzw. korrigieren bei der Datenaufnahme und beim Auslösen der Bildaufnahme die räumliche Lage des Systems nicht derart aktiv, dass damit für die Bilderfassung eine einheitliche Blickrichtung garantiert werden könnte. Dies beeinträchtigt die Genauigkeit der postprozessierten Daten negativ, bis hin zu entstehenden Datenlücken, z.B. Bereiche des zu vermessenden Gebiets, die nicht bildmässig erfasst wurden. Durch die dabei erfassten Bilder mit unterschiedlichen Blickrichtungen verringert sich die Genauigkeit des daraus erzeugbaren Stereobildes, z.B. aufgrund perspektivischer Verzerrungen und verminderter Möglichkeit, Verknüpfungspunkte zwischen den Einzelbildern zu erzeugen. Diese sind für eine genaue Abgleichung der Stereobilder und einer Registrierung der Daten zueinander bei ungenauer GPS Bestimmung notwendig.

Wird das UAV durch eine Windböe erfasst und dadurch stark geneigt z.B. relativ zu einer Nadir- oder Horizontalausrichtung des UAVs so kann im Fall einer dabei erfolgten Luftbilderfassung nicht der gewünschte Geländebereich erfasst werden, sondern je nach Auslenkung des UAVs ein benachbarter oder gar ein Bereich, der keinen Überlapp mit zuvor erfassten Bildern aufweist.

Eine solche Datenlücke wird meist durch wiederholtes Überfliegen und erneutes Bilderfassen des betreffenden Gebiets geschlossen, wobei dies relativ zeitaufwändig ist.

Aufgabe der vorliegenden Erfindung ist es, oben genannte Nachteile hinsichtlich Genauigkeit und Zeitaufwand bei der Luftbildaufnahme zu vermindern bzw. zu vermeiden.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zur Luftbilderfassung mit einem unbemannten und steuerbaren Fluggerät mit Kamera, insbesondere Drohne, während einer Flugbewegung des Fluggeräts, mit einem fortlaufenden Bestimmen einer Kameraposition und einer Ausrichtung einer optischen Kameraachse und einem Erfassen einer Luftbildsserie. Für jedes Bild der Luftbildserie wird das Erfassen des jeweiligen Luftbilds beim Durchfliegen eines jeweiligen Bildauslösebereichs mit dem Fluggerät ausgelöst, wobei die Lage des jeweiligen Bildauslösebereichs zumindest durch jeweils eine dem jeweiligen Bildauslösebereich zugeordnete Auslöseposition in einem Flugplan bestimmt ist, und in Abhängigkeit von der Ausrichtung der optischen Kameraachse beim Durchfliegen des jeweiligen Bildauslösebereichs hinsichtlich eines Erfüllens einer definierten Maximal-Winkelabweichung bezüglich einer vorbestimmten Raumausrichtung (für die Kameraachse).

Das Durchfliegen des jeweiligen Bildauslösebereichs mit dem Fluggerät betrifft insbesondere die Position der Kamera (bzw. des Fluggeräts) bezüglich der Position des Bildauslösebereichs während der Flugbewegung. Solange die aktuell bestimmte Kameraposition (Fluggerätposition) innerhalb dieses Bildauslösebereichs liegt, findet das Durchfliegen dieses Bereichs statt.

Da ein unbemanntes Fluggerät (UAV) typischerweise verhältnismässig schwache Motoren aufweist, kann eine aktive Ausgleichung der Lage des UAVs nur bedingt oder nicht erfolgen. Mittels einer Inertialmesseinheit (IMU) oder anderen Positionsmesssensoren kann jedoch die Lage im Raum des UAVs und der am UAV vorgesehenen Kamera kontinuierlich bestimmt werden.

Das UAV fliegt gemäss dem Flugplan ein aufzunehmendes Gebiet ab. Dabei wird die Kamera innerhalb des vorbestimmten Zeitraums ausgelöst. Unter Hinzunahme der IMU-Messdaten ist dabei die Lage im Raum in "Echtzeit" ermittelbar. Sollte zum erstmöglichen Auslösezeitpunkt (innerhalb des Bildauslösebereichs) das UAV bzw. Kameraachse (Richtung der Bilderfassung mit der Kamera) von einer bevorzugten Ausrichtung abweichen (z.B. starke Schräglage anstelle von einer Nadir- oder horizontalen Blickrichtung der Kamera), dann wird der Auslösezeitpunkt um eine bestimmte Zeit verzögert.

Dadurch können maximal viele Luftbilder in gleicher Blickrichtung (z.B. Nadir) jedoch mit unterschiedlicher Position (mit definierter Mindestüberdeckung) erhalten werden.

Insbesondere ist erfindungsgemäss der Bildauslösebereich durch einen vorgegebenen Überlappungsbereich für zwei während der Flugbewegung nacheinander zu erfassende Luftbilder definiert.

In diesem Zusammenhang entspricht der Überlappungsbereich insbesondere erfindungsgemäss einer Bildfläche zwischen 50% und 90% des Luftbilds, insbesondere einer Bildfläche zwischen 60% und 80% des Luftbilds.

Gemäss einer speziellen Ausführungsform der Erfindung ist der Bildauslösebereich derart bestimmt, dass ein bezüglich einer durch den Flugplan vorgegebenen Flugroute vorbestimmter Mindest-Bildüberlappungsbereich für die zwei nacheinander zu erfassenden Luftbilder definiert ist, insbesondere wobei der Mindest-Bildüberlappungsbereich beim Erfassen der zwei nacheinander zu erfassenden Luftbilder eingehalten wird.

Insbesondere beträgt der Mindest-Bildüberlappungsbereich dabei erfindungsgemäss 60% der Bildfläche des Luftbilds.

Bei einer Mindestüberlappung von 60 Prozent pro Stereo-Bild, kann bei der Flugplanung ein Sicherheitsfaktor von z.B. zusätzlichen 20 Prozent (insgesamt 80 Prozent Überlappung) der Bildfläche berücksichtigt und der Bildauslösebereich entsprechend definiert werden. Sollte dann eine Auslöseverzögerung nötig sein, kann die Verzögerung innerhalb der 20 Prozent Sicherheitsmarge (= Bildauslösebereich) zwischen Mindestüberlappung und Sicherheitsfaktor ausgenutzt werden.

Bezüglich einer weiteren speziellen Ausführungsform der Erfindung sind für den jeweiligen Bildauslösebereich in Abhängigkeit von der zugeordneten Auslöseposition eine Startposition und eine Endposition definiert, insbesondere in Abhängigkeit von dem vorgegebenen Überlappungsbereich, insbesondere bezüglich der durch den Flugplan vorgegebenen Flugroute.

D.h. sobald während der Flugbewegung die Grenzen des Sichtfelds für die Bilderfassung (deren aktuelle Positionen wiederum aus der fortlaufend bestimmten Kameraposition ableitbar sind) mit der Startposition des Bildauslösebereich übereinstimmen bis zum Erreichen einer Übereinstimmung des Sichtfeldgrenze mit der Endposition kann erfindungsgemäss ein Auslösen der Luftbilderfassung erfolgen. Diese Positionen können bestimmt sein durch Messvorgaben wie z.B. zulässige Überlappung der Bilder, Positionen der Auslösepunkte im Flugplan und/oder Solllage des Bildauslösebereichs relativ zum jeweiligen Auslösepunkt.

Gemäss einer speziellen Ausführung der Erfindung ist die vorbestimmte Raumausrichtung eine Nadir-Ausrichtung oder eine horizontale Ausrichtung der Kameraachse. D.h. die Luftbilder werden innerhalb des zulässigen Winkelbereichs um die Nadir-Ausrichtung der Kamera oder um die horizontale Ausrichtung der Kamera erfasst.

Hinsichtlich der Flugplanung kann gemäss der Erfindung insbesondere der Flugplan eine Mehrzahl von Auslösepositionen definieren, wobei jede Auslöseposition eine Lage eines jeweils zugeordneten Bildauslösebereichs zur Erfassung eines jeweiligen Luftbilds definiert, insbesondere wobei die durch den Flugplan definierten Auslösepositionen mit dem Fluggerät gesteuert angeflogen werden, insbesondere gemäss einem vorgegebenen Flugmuster, insbesondere mäanderförmig.

Gemäss einer speziellen Ausführungsform der Erfindung erfolgt ein Aktualisieren der nächsten Auslöseposition der Luftbildserie hinsichtlich deren Position im Flugplan in Abhängigkeit von einem tatsächlichen Erfassungszeitpunkt für die Luftbilderfassung und/oder von einer aktuellen, tatsächlichen Kameraposition bei der Luftbilderfassung. Damit kann eine dynamische Anpassung des Flugplans hinsichtlich der bereits erfassten und als nächste zu erfassende Gebietsteile erfolgen.

Bezüglich eines Erreichens der definierten Maximal-Winkelabweichung bezüglich der vorbestimmten Raumausrichtung kann erfindungsgemäss insbesondere eine Fluggeschwindigkeit des Fluggeräts angepasst werden, insbesondere wobei durch ein Reduzieren der Fluggeschwindigkeit ein verfügbares Erfassungszeitfenster zur Luftbilderfassung vergrössert wird.

Erfindungsgemäss kann insbesondere ausserdem in Abhängigkeit von dem Erfüllen der definierten Maximal-Winkelabweichung bezüglich der vorbestimmten Raumausrichtung während dem Durchfliegen des Bildauslösebereichs mit dem Fluggerät ein wiederholtes Anfliegen der dem Bildauslösebereich zugeordneten Auslöseposition und Erfassen des Luftbilds zu dieser Auslöseposition erfolgen.

Des Weiteren kann im Rahmen der Erfindung die Maximal-Winkelabweichung bezüglich der vorbestimmten Raumausrichtung 5° betragen, insbesondere 2°.

Die Erfindung betrifft ausserdem eine Steuerungseinheit für einen unbemannten Luftbilderfassungsflug, die ausgebildet ist zum Erhalt von Positionsinformation, von Ausrichtungsinformation und von Flugplandaten für ein unbemanntes Fluggerät. Ferner ist die Steuerungseinheit ausgebildet zur derartigen Erzeugung von Steuersignalen zur Steuerung einer Kamera des Fluggeräts für ein Luftbilderfassen, dass das Erfassen eines jeden Luftbilds einer Luftbildserie basierend auf den Steuersignalen gesteuert auslösbar ist
- bei einem Vorliegen einer aus der Positionsinformation ableitbaren Kameraposition innerhalb eines aus den Flugplandaten ableitbaren jeweiligen Bildauslösebereichs, wobei die Lage des jeweiligen Bildauslösebereichs zumindest durch jeweils eine dem jeweiligen Bildauslösebereich zugeordnete Auslöseposition gemäss der Flugplandaten bestimmt ist, und
- in Abhängigkeit von einer aus der Ausrichtungsinformation ableitbaren Ausrichtung einer optischen Kameraachse hinsichtlich eines Erfüllens einer definierten Maximal-Winkelabweichung bezüglich einer vorbestimmten Raumausrichtung (für die optische Kameraachse).

Ferner betrifft die Erfindung ein System aus einer erfindungsgemässen Steuerungseinheit (gemäss obiger Ausführung), einer Kamera, einem Speicher und einer Sensoreinheit zur Bestimmung der Kameraposition und Ausrichtung der optischen Kameraachse, insbesondere GNSS-Empfangseinheit und Inertialmesseinheit. Die Positionsinformation und die Ausrichtungsinformation sind dabei durch die Sensoreinheit bestimmbar und bereitstellbar, die Flugplandaten vermittels des Speichers bereitstellbar und die Kamera mittels der durch die Steuerungseinheit erzeugbaren Steuersignale zur Luftbilderfassung ansteuerbar.

Des Weiteren betrifft die Erfindung ein unbemanntes und steuerbares Fluggerät, insbesondere eine Drohne, mit einem obigen erfindungsgemässen System. Das Fluggerät verfügt über eine derartige Luftbilderfassungsfunktionalität, dass bei deren Ausführung gesteuert durch die Steuerungseinheit währende einer Flugbewegung des Fluggeräts ein Erfassen zumindest eines Luftbilds beim Durchfliegen eines Bildauslösebereichs mit dem Fluggerät, wobei die Lage des Bildauslösebereichs zumindest durch eine dem Bildauslösebereich zugeordnete Auslöseposition in einem Flugplan bestimmt ist, und in Abhängigkeit von der Ausrichtung der Kameraachse beim Durchfliegen des Bildauslösebereichs hinsichtlich einem Erfüllen einer definierten Maximal-Winkelabweichung bezüglich einer vorbestimmten Raumausrichtung (für die optische Achse der Kamera).

Gemäss einer speziellen Ausführungsform der Erfindung ist die Steuerungseinheit derart ausgebildet, dass mit dem Fluggerät ein erfindungsgemässes Verfahren nach einer der obigen Ausführungen ausführbar ist.

Ferner betrifft die Erfindung ein Computerprogrammprodukt mit Programmcode, der auf einem maschinenlesbaren Träger gespeichert ist oder zumindest teilweise durch eine elektromagnetische Welle verkörpert ist, zum Erhalten von Positionsinformation, von Ausrichtungsinformation und von Flugplandaten für ein unbemanntes Fluggerät mit Kamera und zur Steuerung einer Luftbilderfassung in Abhängigkeit von der Positionsinformation, der Ausrichtungsinformation und den Flugplandaten, insbesondere in Abhängigkeit von einer Ausrichtung und Position der Kamera, insbesondere gemäss einem erfindungsgemässen Verfahren, insbesondere wenn das Programm auf einer als erfindungsgemässe Steuerungseinheit ausgebildeten elektronischen Datenverarbeitungseinheit ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Erfassung von Luftbildern mit einem erfindungsgemässen unbemannten Fluggerät;
- Fig.2: Auslösepunkte eines Flugplans und die an diesen jeweiligen Auslöspunkten erfindungsgemäss erfassten Geländebereichen ;
- Fig.3: das Prinzip eines erfindungsgemässen Erfassens zweier überlappender Luftbilder; und
- Fig.4: ein erfindungsgemässes Fluggerät und einen bezüglich der Ausrichtung des Fluggeräts zulässigen Winkelbereich α für das Erfassen eines Luftbilds.

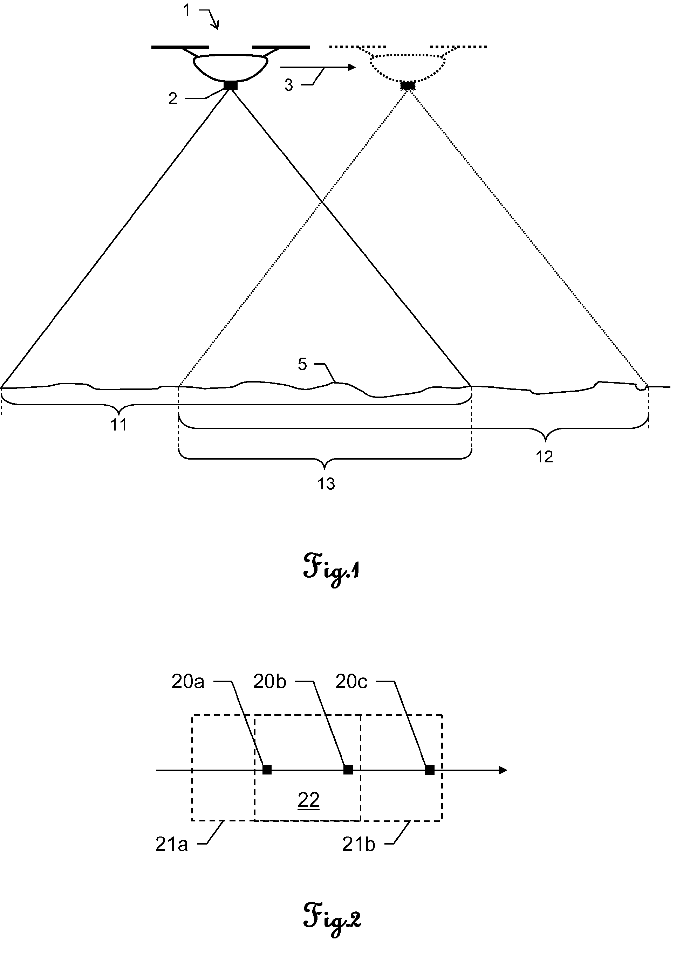

Fig. 1 zeigt ein erfindungsgemässes unbemanntes und steuerbares Fluggerät 1 (UAV) mit einer Kamera 2, wobei mit der Kamera 2 ein Bild eines Teils eines zu erfassenden Geländes 5 erfasst wird. Der Bereich 11 des Geländes 5 wird somit durch das Luftbild erfasst. Die Kamera 2 ist starr und in bekannter relativer Position bezüglich des UAV 1 mit dem Fluggerät 1 verbunden. Eine Position und Ausrichtung für das UAV 1 ist somit im Folgenden weitestgehend gleichbedeutend mit einer Position und Ausrichtung der Kamera 2.

Das Fluggerät 1 verfügt über eine Positionsbestimmungseinheit mittels derer fortlaufend die aktuelle Position des Fluggeräts 1 bzw. der Kamera 2 bestimmt wird. Diese Positionsbestimmungseinheit ist vorzugsweise ausgebildet als GNSS-Empfangseinheit (z.B. GPS, GLONASS oder Galileo), wobei GNSS-Positionssignale erfasst und basierend auf diesen Signalen eine Position des UAVs 1 abgeleitet wird. Zudem weist das UAV 1 eine inertiale Messeinheit (IMU) zur Bestimmung, insbesondere fortlaufend, einer aktuellen Ausrichtung des Fluggeräts 1 bzw. der Kamera 2 (also einer optischen Achse der Kamera) auf. Hierfür können beispielsweise ein Neigungssensor, ein Beschleunigungssensor, ein Magnetkompass und/oder ein Drehratensensor vorgesehen sein.

Das Fluggerät 1 bewegt sich entlang einer vorgegebenen Route (symbolisiert durch den Pfeil 3). Dabei werden fortlaufend die Position und die Ausrichtung des Fluggeräts 1 (der Kamera 2) bestimmt. Erreicht das UAV 1 eine Position für das Erfassen eines nächsten Bildes, so wird ein Luftbild entsprechend dem nächsten Geländeabschnitt 12 erfasst. Dabei ergibt sich in Abhängigkeit der Fluggeschwindigkeit und des jeweiligen Bildauslösezeitpunkts ein Überlappungsbereich 13 für die Geländeabschnitte, d.h. ein Geländebereich 13 der durch beide Luftbilder erfasst ist.

Gemäss der bestimmten Flugroute sind in Abhängigkeit des zu erfassenden Geländes 5 einzelne Auslöspunkte für das Erfassen von Luftbildern des Geländes 5 definiert, d.h. es sind Positionen für die zu erfassenden Luftbilder einer Luftbildserie bestimmt. Diese Punkte sind so vorgegeben, dass jeweils nacheinander erfasste Luftbilder jeweils einen bestimmten Bildüberlappungsbereich aufweisen. Beispielsweise sollen zwei benachbarte Luftbilder sich jeweils um mindestens 60% ihrer Bildfläche überschneiden. Dies erlaubt ein sicheres Erstellen eines Stereobildes des jeweiligen Geländeteils auf Basis dieser beiden Bilder.

Für jeden dieser Auslösepunkte ist ein Bildauslösebereich definiert. Dieser ist erfindungsgemäss derart gewählt, dass ein Bilderfassen während eines Durchfliegens dieses Bildauslösebereichs (solange während der Flugbewegung die Position des Fluggeräts 1 bzw. der Kamera 2 innerhalb des Bildauslösebereichs vorliegt) das Einhalten des mindestens geforderten Mindest-Überlappungsbereichs gewährleistet.

Ferner ist der Bildauslösebereich so gewählt, dass dadurch ein Sicherheitsbereich für das Bilderfassen gegeben ist, d.h. es ergibt sich ein Zeitfenster, in dem das Bilderfassen unter den vorgegebenen Messanforderungen ausgeführt werden kann. Beispielsweise ist für den Bildauslösebereich ein Startpunkt gesetzt, der einer 80-prozentigen Bildüberlappung (für zwei nacheinander zu erfassende Bilder) entspricht, und ein Endpunkt gesetzt, der einer 60-prozentigen Überlappung entspricht, wobei das Luftbild für den Auslösepunkt (der dem Bildauslösebereich zugeordnet ist) innerhalb dieser Grenzen zu erfassen ist. In Abhängigkeit der Fluggeschwindigkeit des Fluggeräts ergibt sich dabei das zulässige Zeitfenster für das Luftbilderfassen.

Innerhalb des Bildauslösebereichs bzw. des zulässigen Zeitfensters, d.h. beim Durchfliegen, wird das Bilderfassen für den betreffenden Auslösepunkt ausgelöst in Abhängigkeit davon, ob die Ausrichtung der optischen Achse der Kamera 2 (optische Kameraachse) innerhalb eines vorbestimmten Winkelbereichs um eine Nadir-Ausrichtung oder eine Horizontalausrichtung für die Kameraachse liegt. Diese Ausrichtung wird durch Bestimmen der Ausrichtung des UAVs 1 bzw. der Kamera 2 mittels der vorgesehenen IMU bestimmt.

Mit anderen Worten heisst das, dass ein Luftbild für einen Auslösepunkt während einem Durchfliegen des zugehörigen Bildauslösebereichs erfasst wird, sobald bzw. falls die Kameraausrichtung eine Maximal-Winkelabweichung bezüglich einer vorbestimmten Soll-Raumrichtung (Nadir- oder Horizontalausrichtung) erfüllt.

Dieses Verfahren basiert insbesondere darauf, dass die eigentliche Trajektorie für das UAV 1 vornehmlich durch Windstösse beeinträchtigt wird, das UAV 1 jedoch generell in eine horizontale Ausrichtung strebt. Diese automatisch erfolgende Bewegung wird durch eine "realtime" (kontinuierliche) Ausrichtungsmessung verfolgt. Bei einer bestimmten Abweichung von der Sollausrichtung um die Nadirausrichtung wird die Auslösung des Luftbilds bei Eintritt in den Bildauslösebereich verzögert und ggf. (bei Erfüllen der maximalen Sollwinkelabweichung) zu einem späteren Zeitpunkt innerhalb des sich ergebenden Zeitfensters vorgenommen.

Damit ist gewährleistet, dass für eine Serie von Luftbildern ein maximales Mass an Aufnahmen gleicher bzw. paralleler Blickrichtungen generiert werden, die das nachfolgende "postprocessing" deutlich erleichtern (hinsichtlich Schnelligkeit und Rechenaufwand) und zudem die Genauigkeit für die daraus erzeugbaren Geländeabbildungen erhöhen.

Fig. 2 zeigt die durch einen Flugplan definierten Auslösepunkte 20a-c und die an den Auslösepunkten 20a-b jeweils erfassten Luftbilder 21a-b. Die Auslösepunkte 20a-c sind so gesetzt, dass bei einer Bilderfassung genau an den jeweiligen Punkten 20a-c sich ein vorbestimmter Bildüberlappungsbereich 22 für zwei aufeinander folgend erfasste Bilder 21a-b ergibt, wobei dieser Bildüberlappungsbereich 22 beispielsweise einer Bildfläche von 50% bis 90% der Fläche der Luftbilder 21a-b entspricht.

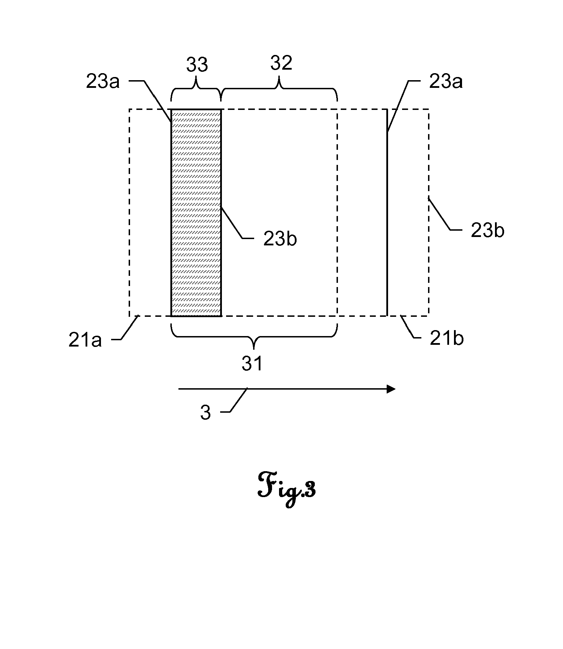

Fig. 3 zeigt das Prinzip eines erfindungsgemässen Erfassens zweier Luftbilder 21a-b bei einer Flugbewegung eines erfindungsgemässen Fluggeräts gemäss der durch Pfeil 3 repräsentierten Richtung.

Zunächst ist das Bild 21a im Flug des UAVs erfasst worden. Während des Weiterflugs des UAVs verschiebt sich das Sichtfeld der Kamera derart, dass ein dann zu einem späteren Zeitpunkt erfasstes Bild 21b korrespondierend zu der verschobenen Lage des Sichtfelds nicht mehr den identischen Erfassungsbereich aufweist, sondern der Erfassungsbereich der Bilder 21a-b teilweise überlappt, sofern das zweite Bild 21b noch im Rahmen der vorgegebenen einzuhaltenden Mindestüberlappung erfasst wird.

Erfindungsgemäss ist für das Erfassen der Luftbilder 21a-b ein Bildauslösebereich 33 definiert. Dieser Bildauslösebereich 33 wird definiert durch eine vorgegeben maximale Überlappung der Bilder 21a-b, z.B. 90% bis 80% der jeweiligen Bildfläche, und durch eine minimale Überlappung der Bilder 21a-b, z.B. 65% bis 55% der jeweiligen Bildfläche. Der maximale Überlappungsbereich 31 und der minimale Überlappungsbereich 32 der Bilder 21a-b definieren damit einen zulässigen relativen Versatz der Bilder 21a-b bzw. des Fluggeräts, mit dem diese Bilder 21a-b erfasst werden.

Bei einer Bildauslösung bei Erreichen der maximalen Überlappung, d.h. bei einem Erreichen einer Position mit dem Fluggerät (der Kamera) derart, dass das zweite Bild mit einer derartigen Überlappung erfassbar ist, wird das zweite Bild 21b in den Grenzen 23a bezüglich der Bewegungsrichtung bzw. Flugroute (gemäss Flugplan) des Fluggeräts erfasst. Bei einer Bildauslösung bei Erreichen der minimalen Überlappung, wird das zweite Bild 21b in den Grenzen 23b bezüglich der Bewegungsrichtung des Fluggeräts erfasst. Das Bilderfassen ist zu jedem (Zeit-)Punkt innerhalb dieser Grenzen ausführbar.

Durch den Bildauslösebereich 33 ist damit ausserdem ein Streckenabschnitt bezüglich der Flugrichtung (Flugroute gemäss Flugplan) definiert, innerhalb dem das Luftbilderfassen erfolgen kann. Das Luftbilderfassen erfolgt damit erfindungsgemäss beim Durchfliegen dieses Streckenabschnitts.

Die Lage des Bildauslösebereich 33 wird ferner durch die Position des Auslösepunkts für das erste Bild 21a bzw. durch die bei dem Erfassen des ersten Bilds 21a vorliegenden Position des Fluggeräts bestimmt.

Ausserdem ist der Bildauslösebereich systembedingt abhängig von der aktuellen oder der im Rahmen der Flugplanung vorgegebenen Flughöhe des Fluggeräts und von dem Sichtfeld der Kamera.

Durch den einzuhaltenden Bildauslösebereich 33 bzw. Überlappungsbereich ist ein Auslösezeitrahmen für das Luftbilderfassen vorgegeben.

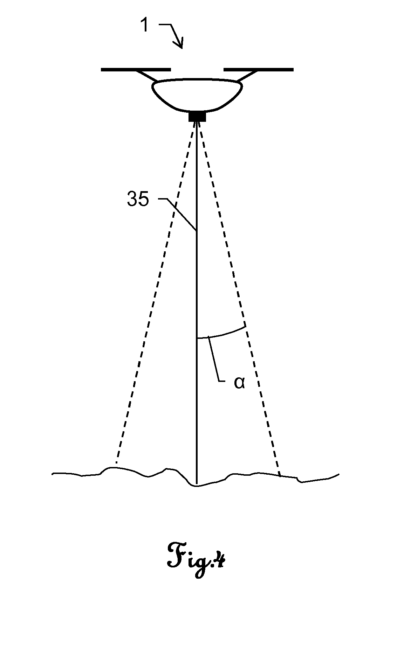

Erfindungsgemäss wird zudem die Ausrichtung des Fluggeräts bzw. der Kamera, d.h. die Lage des Luftfahrzeugs im Raum, fortlaufend bestimmt und in Abhängigkeit der jeweiligen Ausrichtung während dem Durchfliegen des Bildauslösebereichs 33 das Erfassen des Luftbilds ausgelöst. Hierfür ist eine vorgegebene Maximal-Winkelabweichung bezüglich einer vorgegebenen Sollausrichtung (z.B. Nadir-Ausrichtung 35) (vgl. Fig. 4) der Erfassungsrichtung (optischen Achse) der Kamera zu erfüllen.

Fig. 4 zeigt in diesem Zusammenhang ein erfindungsgemässes Fluggerät 1 und einen bezüglich der Ausrichtung des Fluggeräts 1 zulässigen Winkelbereich α, wobei bei einer Ausrichtung der Kamera des Fluggeräts 1 derart, dass die Erfassungsrichtung der Kamera innerhalb dieses Winkelbereichs α um die Nadir-Ausrichtung 35 liegt, ein Auslösen der Luftbilderfassung beim Durchfliegen des Bildauslösebereichs 33 erfolgt. Die Nadir-Ausrichtung 35 entspricht hierbei der vorbestimmten Raumausrichtung für die Kameraachse.

Mit anderen Worten heisst das, dass das Auslösen der Luftbilderfassung bei einer zu grossen Winkelabweichung bei einem Erreichen des Bildauslösebereichs (Eintreten in den Bildauslösebereich während der Flugbewegung) verzögert wird. Die Verzögerung wird dabei derart lange fortgesetzt bis die Ausrichtung des Fluggeräts 1 den definierten Messkriterien (zulässiger Winkelbereich bezüglich der Nadir-Ausrichtung) entspricht. Werden diese Messkriterien während dem Durchfliegen des Bildauslösebereichs erreicht, so wird das Bilderfassen ausgelöst.

Dadurch können Luftbilder einer Luftbildserie mit jeweils im Wesentlichen paralleler bzw. gleicher Ausrichtung der Kamera erfasst werden, wodurch eine deutlich gesteigerte Genauigkeit für ein daraus erzeugtes Stereo-Geländebild erzielt wird und zudem der dafür notwendige Bildverarbeitungsaufwand vergleichsweise gering gehalten werden kann (da dadurch eine deutlich geringe Anzahl von Bilder zu verarbeiten ist).

In Abhängigkeit des tatsächlichen Auslösezeitpunkt bzw. der tatsächlichen Position des Fuggeräts bei der Bilderfassung kann der Flugplan angepasst werden. Insbesondere kann eine Position eines nachfolgenden Auslösepunkt oder des Bildauslösebereichs für diesen Punkt beispielsweise bei einer stark verzögerten Auslösung der Bildaufnahme (z.B. Auslösung bei Erreichen einer einzuhaltenden MindestÜberlappung für die Bilder) so verändert werden, dass für die Luftbilderfassung zu diesem nächsten Auslösepunkt ein den Anforderungen entsprechender Bildauslösebereich (Einhaltung der Überlappung für die folgenden Luftbilder) gegeben ist.

Alternativ dazu kann der jeweilige nachfolgende Auslösepunkt und der zugehörige Auslösebereich positionsmässig beibehalten werden, wodurch beispielsweise (bei wiederum verzögerter Auslösung für den ersten Auslösepunkt) zwei unmittelbar aufeinander folgende Luftbilderfassungen erfolgen.

Wird während des Durchfliegens des Bildauslösebereichs z.B. eine starke Schwenkung bezüglich der bestimmten Ausrichtung des Fluggeräts festgestellt, so dass die Maximal-Winkelabweichung voraussichtlich nicht innerhalb des Bildauslösebereichs erreicht werden kann, so kann die Fluggeschwindigkeit des Fluggeräts angepasst (verringert) werden, damit das Zeitfenster zur Bilderfassung damit verändert (vergrössert) wird und die Wahrscheinlichkeit zur Erreichung der Maximal-Winkelabweichung vergrössert wird. Eine solche Anpassung der Fluggeschwindigkeit kann auch in Abhängigkeit anderer Faktoren erfolgen, z.B. für mit einer gesteigerten Genauigkeit zu erfassende Geländeabschnitte.

Bei einem Nicht-Erfüllen dieses Winkel-Kriteriums beim Durchfliegen des Bereichs, wird für den betreffenden Auslösepunkt insbesondere kein Luftbild erfasst und die Luftbilderfassung bei dem nächsten Auslösepunkt fortgesetzt. Eine dadurch entstehende Lücke in der Luftbildserie kann erfindungsgemäss dadurch geschlossen werden, dass das Fluggerät gezielt erneut zu dem betreffenden Auslösepunkt (automatisch) gesteuert geflogen wird und bezüglich diesem Auslösepunkt das erfindungsgemässe Bilderfassen wiederholt wird. Das dabei entstehende Liftbild kann in die Luftbildserie eingefügt werden.

Es versteht sich, dass die dargestellten Figuren nur mögliche Ausführungsbeispiele schematisch darstellen. Die verschiedenen Ansätze können erfindungsgemäss ebenso miteinander sowie mit Verfahren und Vorrichtungen zur Luftbilderfassung, unbemannten Fluggeräten, des Stands der Technik kombiniert werden.

## Patentansprüche

1. Verfahren zur Luftbilderfassung mit einem unbemannten und steuerbaren Fluggerät (1) mit Kamera (2), insbesondere Drohne, während einer Flugbewegung des Fluggeräts (1), mit
● einem fortlaufenden Bestimmen einer Kameraposition und einer Ausrichtung einer optischen Kameraachse und
● einem Erfassen einer Luftbildsserie,
**dadurch gekennzeichnet, dass**
für jedes Luftbild (21a-b) der Luftbildserie das Erfassen des jeweiligen Luftbilds (21a-b) ausgelöst wird
● beim Durchfliegen eines jeweiligen Bildauslösebereichs (33) mit dem Fluggerät (1), wobei die Lage des jeweiligen Bildauslösebereichs (33) zumindest durch jeweils eine dem jeweiligen Bildauslösebereich (33) zugeordnete Auslöseposition (20a-c) in einem Flugplan bestimmt ist, und
● in Abhängigkeit von der Ausrichtung der Kameraachse beim Durchfliegen des jeweiligen Bildauslösebereichs (33) hinsichtlich eines Erfüllens einer definierten Maximal-Winkelabweichung (α) bezüglich einer vorbestimmten Raumausrichtung (35).

2. Verfahren nach Anspruch 1,
**dadurch gekennzeichnet, dass**
der Bildauslösebereich (33) durch einen vorgegebenen Überlappungsbereich (22,31,32) für zwei während der Flugbewegung nacheinander zu erfassende Luftbilder (21a-b) definiert ist, insbesondere wobei der Überlappungsbereich (22,31,32) einer Bildfläche zwischen 50% und 90% des Luftbilds (21a-b) entspricht, insbesondere einer Bildfläche zwischen 60% und 80% des Luftbilds (21a-b).

3. Verfahren nach Anspruch 2,
**dadurch gekennzeichnet, dass**
der Bildauslösebereich (33) derart bestimmt ist, dass ein bezüglich einer durch den Flugplan vorgegebenen Flugroute vorbestimmter Mindest-Bildüberlappungsbereich (32) für die zwei nacheinander zu erfassenden Luftbilder (21a-b) definiert ist, insbesondere wobei der Mindest-Bildüberlappungsbereich (32) beim Erfassen der zwei nacheinander zu erfassenden Luftbilder (21a-b) eingehalten wird.

4. Verfahren nach Anspruch 3,
**dadurch gekennzeichnet, dass**
der Mindest-Bildüberlappungsbereich (32) 60% der Bildfläche des Luftbilds (21a-b) beträgt.

5. Verfahren nach einem der Ansprüche 1 bis 4,
**dadurch gekennzeichnet, dass**
für den jeweiligen Bildauslösebereich (33) in Abhängigkeit von der zugeordneten Auslöseposition (20a-c) eine Startposition und eine Endposition definiert sind, insbesondere in Abhängigkeit von dem vorgegebenen Überlappungsbereich (22,31,32), insbesondere bezüglich der durch den Flugplan vorgegebenen Flugroute.

6. Verfahren nach einem der Ansprüche 1 bis 5,
**dadurch gekennzeichnet, dass**
die vorbestimmte Raumausrichtung eine Nadir-Ausrichtung (35) oder eine horizontale Ausrichtung der Kameraachse ist.

7. Verfahren nach einem der Ansprüche 1 bis 6,
**dadurch gekennzeichnet, dass**
der Flugplan eine Mehrzahl von Auslösepositionen (20a-c) definiert, wobei jede Auslöseposition (20a-c) eine Lage eines jeweils zugeordneten Bildauslösebereichs (33) zur Erfassung eines jeweiligen Luftbilds (21a-b) definiert, insbesondere wobei die durch den Flugplan definierten Auslösepositionen (20a-c) mit dem Fluggerät (1) gesteuert angeflogen werden, insbesondere gemäss einem vorgegebenen Flugmuster, insbesondere mäanderförmig.

8. Verfahren nach einem der Ansprüche 1 bis 7,
**dadurch gekennzeichnet, dass**
ein Aktualisieren der nächsten Auslöseposition (20a-c) der Luftbildserie hinsichtlich deren Position im Flugplan erfolgt in Abhängigkeit von
● einem Erfassungszeitpunkt für die Luftbilderfassung und/oder
● einer aktuellen Kameraposition bei der Luftbilderfassung.

9. Verfahren nach einem der Ansprüche 1 bis 8,
**dadurch gekennzeichnet, dass**
zum Erreichen der definierten Maximal-Winkelabweichung (α) bezüglich der vorbestimmten Raumausrichtung (35) eine Fluggeschwindigkeit des Fluggeräts (1) angepasst wird, insbesondere wobei durch ein Reduzieren der Fluggeschwindigkeit ein verfügbares Erfassungszeitfenster zur Luftbilderfassung vergrössert wird.

10. Verfahren nach einem der Ansprüche 1 bis 9,
**dadurch gekennzeichnet, dass**
in Abhängigkeit von dem Erfüllen der definierten Maximal-Winkelabweichung (α) bezüglich der vorbestimmten Raumausrichtung (35) während dem Durchfliegen des Bildauslösebereichs (33) mit dem Fluggerät (1) ein wiederholtes Anfliegen der dem Bildauslösebereich (33) zugeordneten Auslöseposition (20a-c) und Erfassen des Luftbilds (21a-b) zu dieser Auslöseposition (20a-c) erfolgt, und/oder
die Maximal-Winkelabweichung (α) bezüglich der vorbestimmten Raumausrichtung 5° beträgt, insbesondere 2°.

11. Steuerungseinheit für einen unbemannten Luftbilderfassungsflug, ausgebildet zum Erhalt von Positionsinformation, von Ausrichtungsinformation und von Flugplandaten für ein unbemanntes Fluggerät (1), **dadurch gekennzeichnet, dass**
die Steuerungseinheit ausgebildet ist zur derartigen Erzeugung von Steuersignalen zur Steuerung einer Kamera (2) des Fluggeräts (1) für ein Luftbilderfassen, dass das Erfassen eines jeden Luftbilds (21a-b) einer Luftbildserie basierend auf den Steuersignalen gesteuert auslösbar ist
● bei einem Vorliegen einer aus der Positionsinformation ableitbaren Kameraposition innerhalb eines aus den Flugplandaten ableitbaren jeweiligen Bildauslösebereichs (33), wobei die Lage des jeweiligen Bildauslösebereichs (33) zumindest durch jeweils eine dem jeweiligen Bildauslösebereich (33) zugeordnete Auslöseposition (20a-c) gemäss der Flugplandaten bestimmt ist, und
● in Abhängigkeit von einer aus der Ausrichtungsinformation ableitbaren Ausrichtung einer optischen Kameraachse hinsichtlich eines Erfüllens einer definierten Maximal-Winkelabweichung (α) bezüglich einer vorbestimmten Raumausrichtung (35).

12. System aus
● einer Steuerungseinheit gemäss Anspruch 11,
● einer Kamera (2),
● einem Speicher und
● einer Sensoreinheit zur Bestimmung einer Kameraposition und Ausrichtung der optischen Kameraachse, insbesondere GNSS-Empfangseinheit und Inertialmesseinheit,
wobei
● die Positionsinformation und die Ausrichtungsinformation durch die Sensoreinheit bestimmbar und bereitstellbar sind,
● die Flugplandaten vermittels des Speichers bereitstellbar sind und
● die Kamera (2) mittels der durch die Steuerungseinheit erzeugbaren Steuersignale zur Luftbilderfassung ansteuerbar ist.

13. Unbemanntes und steuerbares Fluggerät (1), insbesondere Drohne, mit einem System gemäss Anspruch 12,
**gekennzeichnet durch**
eine derartige Luftbilderfassungsfunktionalität, dass bei deren Ausführung gesteuert **durch** die Steuerungseinheit währende einer Flugbewegung des Fluggeräts (1) ein Erfassen zumindest eines Luftbilds (21a-b) ausgelöst wird
● beim Durchfliegen eines Bildauslösebereichs (33) mit dem Fluggerät (1), wobei die Lage des Bildauslösebereichs (33) zumindest **durch** eine dem Bildauslösebereich (33) zugeordnete Auslöseposition in einem Flugplan bestimmt ist, und
● in Abhängigkeit von der Ausrichtung der Kameraachse beim Durchfliegen des Bildauslösebereichs (33) hinsichtlich eines Erfüllens einer definierten Maximal-Winkelabweichung (α) bezüglich einer vorbestimmten Raumausrichtung (35).

14. Fluggerät (1) nach Anspruch 13,
**dadurch gekennzeichnet, dass**
die Steuerungseinheit derart ausgebildet ist, dass mit dem Fluggerät (1) ein Verfahren nach einem der Ansprüche 1 bis 10 ausführbar ist.

15. Computerprogrammprodukt mit Programmcode, der auf einem maschinenlesbaren Träger gespeichert ist oder zumindest teilweise durch eine elektromagnetische Welle verkörpert ist,
● zum Erhalten von
□ Positionsinformation,
□ Ausrichtungsinformation und
□ Flugplandaten
für ein unbemanntes Fluggerät (1) mit Kamera (2) und
● zur Steuerung einer Luftbilderfassung in Abhängigkeit von der Positionsinformation, der Ausrichtungsinformation und den Flugplandaten, insbesondere in Abhängigkeit von einer Ausrichtung und Position der Kamera(2),
gemäss einem Verfahren nach einem der Ansprüche 1 bis 10, insbesondere wenn das Programm auf einer als Steuerungseinheit nach einem der Ansprüche 11 bis 14 ausgebildeten elektronischen Datenverarbeitungseinheit ausgeführt wird.
